# EUROPÄISCHE PATENTANMELDUNG

(11) **EP 1 033 284 A2**
(43) Veröffentlichungstag der Anmeldung: **06.09.2000**
(21) Anmeldenummer: 00102014.8
(22) Anmeldetag: 02.02.2000
(51) Int. Cl.: B60P 7/13

(54) **Strebenartige Transportsicherungsvorrichtung**

(30) Priorität: 03.02.1999 DE 29901812 U
(71) Anmelder: MeHa, 73262 Reichenbach/Fils (DE)
(72) Erfinder: Meyer, Reinhard, 73066 Uhingen (DE); Haug, Rainer, 73033 Göppingen (DE)
(74) Vertreter: Grosse, Rainer, Dipl.-Ing.

(57) **Zusammenfassung**

Die Erfindung betrifft eine strebenartige Transportsicherungsvorrichtung für ein insbesondere auf einer Ladefläche (1) aufliegendes Gut (3), wobei die Transportsicherungsvorrichtung (5) zwischen dem Gut (3) und einem Gegenlager (10) anordenbar ist, mit mindestens zwei zur Abstützung am Gut (3) beziehungsweise am Gegenlager (10) dienenden Abstützelementen (7,9) und mit einer zwischen den Abstützelementen (7,9) angeordneten Längenverstellvorrichtung (33), die zur Grobeinstellung zwei teleskopartig ineinander geführte und in vorgegebener Längenposition miteinander fixierbare Stützstreben (11,12) sowie zur Spannung des Guts (3) ein kontinuierlich arbeitendes Längenverstellelement (22) aufweist.

## Beschreibung

Die Erfindung betrifft eine strebenartige Transportsicherungsvorrichtung für ein insbesondere auf einer Ladefläche aufliegendes Gut.

Aus dem Stand der Technik sind Transportsicherungsvorrichtungen bekannt, die ein auf einer Ladefläche aufliegendes Gut gegen Verrutschen sichern sollen. In manchen Fällen ist es außerdem notwendig, das Gut beziehungsweise mehrere Güter auf einer Ladefläche so anzuordnen, daß eine gleichmäßige oder vorgegebene Gewichtsverteilung eingehalten werden kann. Somit wird das Gut beziehungsweise werden die Güter an einer vorgegebenen Position auf der Ladefläche angeordnet und mittels einer Transportsicherungsvorrichtung gesichert. Eine bekannte Transportsicherungsvorrichtung weist ein flexibles Band auf, dessen Enden an der Ladefläche befestigt sind, wobei sich das Band über das Gut erstreckt. Um das Gut an der vorgebbaren Position zu halten, werden die Bänder angezogen beziehungsweise verzurrt. Ist die Ladefläche auf einem Gütertransportmittel vorgesehen, so muß beispielsweise auch bei einer Vollbremsung sichergestellt sein, daß das Gut dennoch an seiner vorgegebenen Position fixiert bleibt. Es hat sich herausgestellt, daß die aus dem Stand der Technik bekannten Bänder beziehungsweise Sicherungsgurte nicht in allen Fällen eine ausreichende Sicherung gegen das Verrutschen des Guts bieten.

Es ist daher Aufgabe der Erfindung, eine Transportsicherungsvorrichtung anzugeben, welche das Gut sicher auf einer Ladefläche hält.

Diese Aufgabe wird mit einer strebenartigen Transportsicherungsvorrichtung gelöst, die die Merkmale des Schutzanspruchs 1 aufweist. Die strebenartige Transportsicherungsvorrichtung ist zwischen einem auf einer Ladefläche aufliegenden Gut und einem Gegenlager anordenbar. Die erfindungsgemäße strebenartige Transportsicherungsvorrichtung weist mindestens zwei zur Abstützung am Gut beziehungsweise am Gegenlager dienende Abstützelemente auf. Weiterhin weist die Transportsicherungsvorrichtung eine Längenverstellvorrichtung auf, die zwischen den Abstützelementen angeordnet ist. Zur Grobeinstellung der Länge sind zwei teleskopartig ineinander geführte und in vorgegebener Längsposition miteinander fixierbare Stützstreben vorgesehen. Außerdem weist die Längenverstellvorrichtung zur Spannung beziehungsweise Verspannung des Guts ein kontinuierlich arbeitendes Längenverstellelement auf. Zur Spannung des Guts kann also ein stufenlos längenverstellbares Element vorgesehen sein. Mit der erfindungsgemäßen strebenartigen Transportsicherungsvorrichtung wird ein sicheres Fixieren des auf der Ladefläche aufliegenden Guts erreicht, wobei für die strebenartige Transportsicherungsvorrichtung insbesondere hohe Zug- und Druckkräfte aufnehmbare Werkstoffe, beispielsweise Metall, vorgesehen sind.

Überdies ist die erfindungsgemäße Transportsicherungsvorrichtung sehr einfach zwischen dem Gut und dem Gegenlager anbringbar. Dadurch, daß die Transportsicherungsvorrichtung längenverstellbar ist, wird außerdem in vorteilhafter Weise eine nahezu beliebige Positionierung des Guts auf der Ladefläche ermöglicht. Somit kann eine optimale Gewichtsverteilung auf der Ladefläche erreicht werden.

Ein bevorzugtes Ausführungsbeispiel der Transportsicherungsvorrichtung zeichnet sich dadurch aus, daß zur Grobeinstellung die Stützstreben miteinander in Fluchtungsposition bringbare Durchbrüche aufweisen, in die -zur Fixierung der Längenverstellposition- ein Bolzen einsteckbar ist. Vorzugsweise werden als Stützstreben Rohre verwendet, wobei der Außendurchmesser einer Stützstrebe etwa dem Innendurchmesser der anderen Stützstrebe entspricht. Mithin ist auf besonders einfache Art und Weise die teleskopartige Verschiebung beziehungsweise Längenverstellung möglich. In die Rohre sind dann die Durchbrüche eingebracht, so daß die entsprechend gewählte Auszugsposition mit dem Bolzen fixierbar ist.

Ein weiteres bevorzugtes Ausführungsbeispiel zeichnet sich dadurch aus, daß das gutseitige Abstützelement als Abstützplatte ausgebildet ist. Mithin kann am Gut beziehungsweise an dessen Verpackung eine große Abstützfläche bereitgestellt werden, so daß -bei Belastung des Guts beispielsweise durch eine Vollbremsung des die Ladefläche aufweisenden Kraftfahrzeugs- keine Beschädigungen am Gut auftreten.

Nach einer Weiterbildung der Erfindung ist vorgesehen, daß die gutseitige Abstützplatte gelenkig mit der Längenverstellvorrichtung verbunden ist. Somit kann in besonders vorteilhafter Weise der Winkel der Abstützplatte bezüglich der Längenverstellvorrichtung verändert werden, so daß die Abstützplatte auch an schräg verlaufende Wände des Guts angelegt werden kann.

In besonders bevorzugter Ausführungsform ist vorgesehen, daß das gegenlagerseitige Abstützelement gelenkig mit der Längenverstellvorrichtung verbunden ist, so daß auch hier ein Winkel zwischen der Längenverstellvorrichtung und dem Gegenlager einnehmbar ist.

Nach einem bevorzugten Ausführungsbeispiel ist vorgesehen, daß das gegenlagerseitige Abstützelement als Abstützplatte ausgebildet ist, die beispielsweise an einer die Ladefläche umgebenden Wandung anlegbar ist. Somit müssen an der Ladefläche beziehhungsweise an der die Ladefläche umgebenden Wandung keine besonderen Befestigungspunkte beziehungsweise Befestigungselemente für die Transportsicherungsvorrichtung vorgesehen sein. Die erfindungsgemäße Transportsicherungsvorrichtung kann also an beliebig ausgebildeten Ladeflächen beziehungsweise Wandungen angelegt werden.

Ein besonders bevorzugtes Ausführungsbeispiel der Transportsicherungsvorrichtung zeichnet sich dadurch aus, daß das Längenverstellelement eine hydraulisch oder pneumatisch arbeitende Kolben-Zylindereinheit aufweist. Mit der erfindungsgemäß vorgesehenen Kolben-Zylindereinheit kann in besonders einfacher Art und Weise das Spannen des Guts durchgeführt werden. Mithin bildet die Kolben-Zylindereinheit das kontinuierlich arbeitende Längenverstellelement, das überdies -neben der Grobeinstellung- eine Feineinstellung der Längenverstellposition der Längenverstellvorrichtung ermöglicht.

In bevorzugter Ausführungsform ist vorgesehen, daß die Stützstreben und das Längenverstellelement in Reihe zueinander angeordnet sind. Beispielsweise kann vorgesehen sein, daß das Längenverstellelement, also beispielsweise die Kolben-Zylindereinheit an einer Abstützplatte der Transportsicherungsvorrichtung angelenkt ist. An das Längenverstellelement schließen sich dann die Stützstreben an, so daß eine Verbindung zwischen beiden Abstützelementen gegeben ist. Dadurch, daß sowohl die Stützstreben als auch das Längenverstellelement in Reihe zueinander liegen, kann zunächst auf einfache Art und Weise die Grobeinstellung und anschließend die Verspannung des Guts durchgeführt werden, da die Richtung der Längenverstellbarkeit der Stützstreben und die des Längenverstellelements zusammenfallen. Das heißt, die Ausfahrbarkeit der Kolben-Zylindereinheit und das teleskopartige Auseinanderziehen der Stützstreben kann in derselben Richtung erfolgen.

Ein besonders bevorzugtes Ausführungsbeispiel zeichnet sich dadurch aus, daß die Kolben-Zylindereinheit eine Schnellverschluß-Kupplung für eine Versorgungseinrichtung aufweist. Das heißt, es ist eine Schnellverschluß-Kupplung zu einer ein Arbeitsmedium bereitstellenden Versorgungseinrichtung vorgesehen, wobei die Versorgungseinrichtung eine Beaufschlagung der Kolben-Zylindereinheit mit Druckluft oder einem Hydrauliköl ermöglicht. Wird die erfindungsgemäße Transportsicherungsvorrichtung auf einer Ladefläche eines Kraftfahrzeugs, beispielsweise eines Lastkraftwagens, verwendet, kann mit der Schnellverschluß-Kupplung eine Versorgung der Kolben-Zylindereinheit mittels der Druckluftbremsenvorrichtung des Kraftfahrzeugs hergestellt werden, so daß für die Transportsicherungsvorrichtung keine separate Versorgungseinheit bereitgestellt werden muß.

Alternativ kann jedoch auch vorgesehen sein, daß die Kolben-Zylindereinheit eine Versorgungseinrichtung umfaßt, also die Versorgungseinrichtung und die Kolben-Zylindereinheit eine Baueinheit bilden. Somit ist die erfindungsgemäße Transportsicherungsvorrichtung unabhängig von externen Versorgungseinrichtungen.

Nach einer Weiterbildung der Erfindung ist vorgesehen, daß die gelenkigen Verbindungen zwischen gutseitigem Abstützelement und Längenverstellvorrichtung beziehungsweise zwischen gegenlagerseitigem Abstützelement und Längenverstelleinrichtung jeweils einen Kugelkopf und eine den Kugelkopf aufnehmende Pfanne aufweisen. Somit kann auf einfache Art und Weise die gelenkige Verbindung zwischen der gutseitigen und der gegenlagerseitigen Abstützplatte und der Längenverstellvorrichtung bereitgestellt werden.

Weitere Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: ein erstes Ausführungsbeispiel einer Transportsicherungsvorrichtung mit teleskopartig ausziehbaren Stützstreben sowie einem Längenverstellelement, und
- Figur 2: ein zweites Ausführungsbeispiel einer Transportsicherungsvorrichtung.

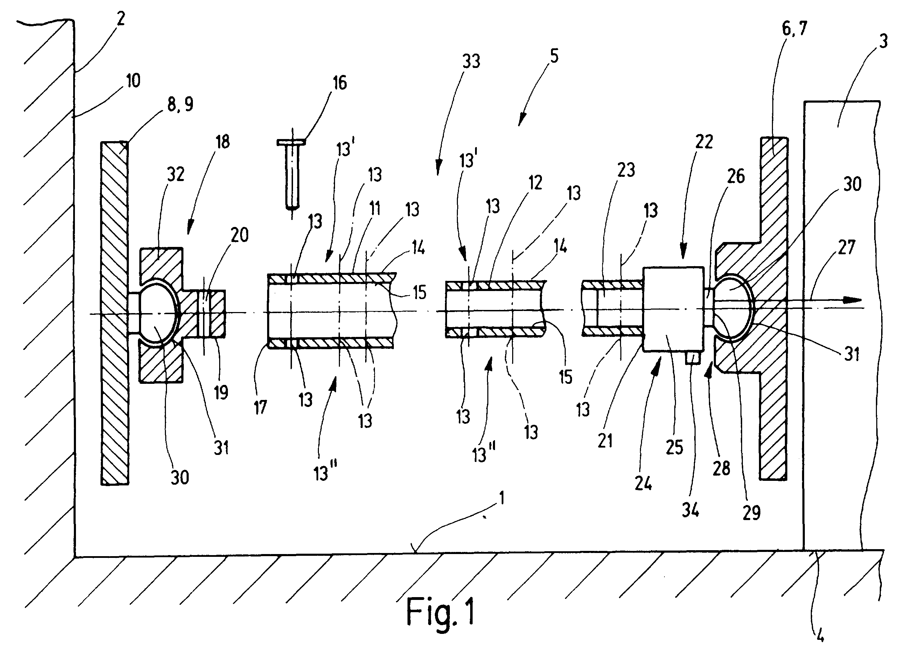

Figur 1 zeigt ausschnittweise eine Ladefläche 1, die vorzugsweise zumindest teilweise von einer vorzugsweise etwa senkrecht auf der Ladefläche 1 stehenden Wandung 2 umgeben ist. Auf der Ladefläche 1 liegt ein hier ausschnittweise dargestelltes, hier kastenförmig ausgebildetes Gut 3 mit einer Unterseite 4 auf. Selbstverständlich kann das Gut 3 auch eine andere äußere Form aufweisen und auch von einer Verpackung umgeben sein.

Zwischen dem Gut 3 und der Wandung 2 ist eine strebenartige Transportsicherungsvorrichtung 5 vorgesehen, die sich gutseitig mit einem als Abstützplatte 6 ausgebildeten Abstützelement 7 abstützt. Auf der dem Abstützelement 7 gegenüberliegenden Seite stützt sich die Transportsicherungsvorrichtung 5 mit einem als Abstützplatte 8 ausgebildeten Abstützelement 9 an einem Gegenlager 10 ab, das im Ausführungsbeispiel durch die Wandung 2 gebildet ist.

Außerdem weist die Transportsicherungsvorrichtung 5 zur groben Längenverstellung zwei teleskopartig ineinander geführte Stützstreben 11 und 12 auf, wobei insbesondere vorgesehen ist, daß beide Stützstreben 11 und 12 aus Rohren gebildet sind, wobei der Außendurchmesser der Stützstrebe 12 dem Innendurchmesser der Stützstrebe 11 angepaßt ist. In beiden Stützstreben 11 und 12 sind Durchbrüche 13 vorgesehen, die sich also von der Außenseite 14 zur Innenseite 15 jeder Stützstrebe 11 und 12 erstrecken und jeweils eine Lochreihe 13' bilden, wobei vorzugsweise die Durchbrüche 13 einer Lochreihe 13' jeweils einen gleichen Abstand zueinander aufweisen. Den Durchbrüchen 13 diametral gegenüberliegend sind weitere Durchbrüche 13 an jeder Stützstrebe 11 und 12 vorgesehen, die sich ebenfalls von der Außenseite 14 zur Innenseite 15 erstrecken. Auch diese Durchbrüche 13 bilden jeweils eine Lochreihe 13'' aus, wobei zwei Durchbrüche 13 einer Lochreihe 13'' vorzugsweise einen gleichen Abstand zueinander aufweisen. Jeweils strichpunktiert dargestellt, sind an den Stützstreben 11 und 12 weitere Durchbrüche 13 vorgesehen. Zur Fixierung der Auszugsstellung beider Stützstreben 11 und 12 werden zwei sich gegenüberliegende Durchbrüche 13 der Stützstrebe 12 mit zwei sich gegenüberliegenden Durchbrüchen 13 der Stützstrebe 11 in Fluchtungsposition gebracht, so daß ein Bolzen 16 durch diese Durchbrüche steckbar ist. Somit wird die entsprechend gewählte Auszugsposition und damit die Längenverstellung der Stützstreben 11 und 12 fixiert.

Am gegenlagerseitigen Ende 17 sind Durchbrüche 13 der Stützstrebe 11 vorgesehen, so daß diese Stützstrebe 12 mit einer Gelenkverbindung 18 koppelbar ist, indem die Stützstrebe 11 auf einen Vorsprung 19 der Gelenkverbindung 18 aufsteckbar ist. Diese Aufsteckposition kann ebenfalls durch einen Bolzen 16 fixiert werden, der dann die Durchbrüche 13 der Stützstrebe 11 sowie einen am Vorsprung 19 ausgebildeten Durchbruch 20 durchgreift. Mithin ist die Stützstrebe 11 gelenkig mit der Abstützplatte 8 beziehungsweise dem Abstützelement 9 verbunden.

An ihrem gutseitigen Ende 21 weist die Stützstrebe 12 ebenfalls Durchbrüche 13 auf, die hier lediglich durch eine strichpunktierte Linie angedeutet sind. Die Stützstrebe 12 ist an ein Längenverstellelement 22 angekoppelt, das einen Vorsprung 23 aufweist, der in die Stützstrebe 12 eingreift. Der Vorsprung 23 weist vorzugsweise ebenfalls einen Durchbruch auf, so daß das Längenverstellelement 22 und die Stützstrebe 12 mit einem Bolzen 16 miteinander koppelbar sind.

Das Längenverstellelement 22 ist vorzugsweise als Kolben-Zylindereinheit 24 ausgebildet, die einen Zylinder 25 und einen Kolben 26 aufweist. Der Kolben 26 ist in Pfeilrichtung 27 aus dem Zylinder 25 ausfahrbar und entgegen der Pfeilrichtung 27 einfahrbar. Die Abstützplatte 6 beziehungsweise das Abstützelement 7 ist mit einer Gelenkverbindung 28 am Längenverstellelement 22 angekoppelt. Die Gelenkverbindung 28 weist einen am gutseitigen Ende 29 des Kolbens 26 ausgebildeten Kugelkopf 30 auf, der in einer im Abstützelement 7 beziehungsweise in der Abstützplatte 6 ausgebildeten Pfanne 31 einliegt. Die Gelenkverbindung 18 weist ebenfalls einen Kugelkopf 30 auf, der von dem Abstützelement 9 beziehungsweise von der Abstützplatte 8 ausgeht. Dieser Kugelkopf 30 wird von einer Pfanne 31 aufgenommen, die in einem Fortsatz 32 des Vorsprungs 19 ausgebildet ist.

Zwischen dem gutseitigen Abstützelement 7 und dem gegenlagerseitigen Abstützelement 9 ist also eine Längenverstellvorrichtung 33 angeordnet, die zur Grobeinstellung die teleskopartig ineinandergeführten und in vorgegebener Längsposition miteinander fixierbaren Stützstreben 11 und 12 sowie zur Spannung des Guts 3 beziehungsweise zur Feineinstellung der Längenverstelleinrichtung 33 das kontinuierlich arbeitende Längenverstellelement 22 aufweist.

An der Kolben-Zylindereinheit 24 ist schematisch noch eine Schnellverschluß-Kupplung 34 gezeigt, die zur Kopplung der Kolben-Zylindereinheit 24 mit einer hydraulisch oder pneumatisch arbeitenden Versorgungseinrichtung (hier nicht dargestellt) vorgesehen ist. Die Versorgungseinrichtung kann beispielsweise an einem Kraftfahrzeug (nicht dargestellt) bereits vorhanden sein, das die Ladefläche 1 aufweist. Selbstverständlich ist es jedoch auch möglich, eine Versorgungseinrichtung der Kolben-Zylindereinheit 24 direkt zuzuordnen, so daß eine Baueinheit gebildet ist. Mithin weist jede Transportsicherungsvorrichtung eine Versorgungseinrichtung für das Längenverstellelement 22 auf.

Das Längenverstellelement 22 muß nicht zwingend als Kolben-Zylindereinheit 24 ausgebildet sein. Denkbar wäre auch, daß an einem Ende ein ein Außengewinde aufweisender Bolzen den Kugelkopf 30 der Gelenkverbindung 28 trägt und mit seinem Außengewinde in die dann ein Innengewinde aufweisende Stützstrebe 12 eingeschraubt ist. Dem Gewindebolzen kann dann eine Betätigungseinrichtung zugeordnet sein, so daß durch Drehung des Bolzens oder der Stützstrebe 11 eine kontinuierliche Längenverstellung der Längenverstellvorrichtung 33 ermöglicht ist.

Im gezeigten Ausführungsbeispiel der Transportsicherungsvorrichtung 5 liegen die Stützstreben 11 und 12 und das Längenverstellelement 22 in Reihe zueinander, wobei ausgehend von der gutseitigen Abstützplatte 6 zuerst das Längenverstellelement 22 und dann die Stützstreben vorgesehen sind, die sich dann bis zur gegenlagerseitigen Abstützelement 8 erstrecken. Selbstverständlich kann auch eine andere Anordnung gewählt werden. Beispielsweise kann das Längenverstellelement 22 gegenlagerseitig vorgesehen sein. Denkbar wäre auch, daß das Längenverstellelement 22 mittig in der Längenverstellvorrichtung 33 angeordnet ist, also beispielsweise zwischen dem Kolben 26 der Kolben-Zylindereinheit 24 und dem Kugelkopf 30 der Gelenkverbindung 28 eine weitere Strebe zwischengeschaltet ist.

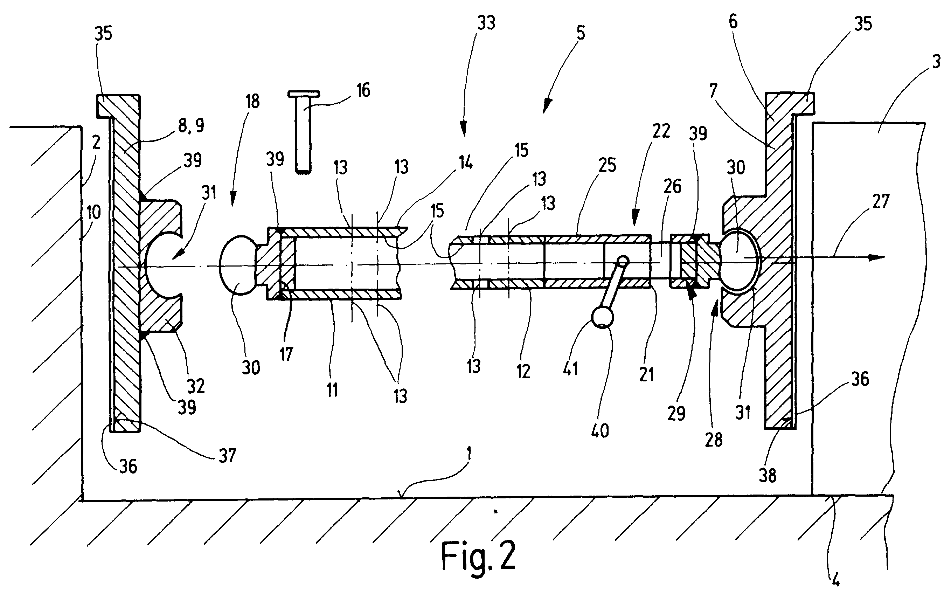

In Figur 2 ist ein zweites Ausführungsbeispiel einer Transportsicherungsvorrichtung 5 gezeigt. Gleiche Teile wie im Ausführungsbeispiel gemäß Figur 1 sind mit denselben Bezugszeichen versehen, insofern wird auf deren nochmalige Beschreibung verzichtet.

Gemäß Figur 2 weisen die Abstützelemente 7 und 9 beziehungsweise die Abstützplatten 6 und 8 einen Fortsatz 35 auf, der sich beim Abstützelement 9 in Richtung des Gegenlagers 10 und beim Abstützelement 7 in Richtung des Guts 3 erstreckt. Das heißt, die Fortsätze 35 an den Abstützelementen 7 und 9 erstrecken sich nach außen, also von der Längenverstellvorrichtung 33 weggerichtet. Bevorzugt sind die Fortsätze 35 einem Randbereich der Abstützplatte 6 beziehungsweise 6 zugeordnet und verlaufen in Figur 2 senkrecht zur Zeichnungsebene. Die Fortsätze 35 müssen sich jedoch nicht über die gesamte Seitenlänge der Abstützplatte 6 beziehungsweise 8 erstrecken. Mit den Fortsätzen 35 kann sich die Transportsicherungsvorrichtung 5 am Gut 3 beziehungsweise an einer Wandung 2 abstützen, so daß die Transportsicherungsvorrichtung 5 quasi zwischen Gut 3 und Gegenlager 10 eingehängt werden kann. Dies erleichtert die Anbringung der Transportsicherungsvorrichtung 5.

Am Abstützelement 9 beziehungsweise an der Abstützplatte 8 ist an deren Außenseite noch eine Beschichtung 36 vorgesehen, die vorzugsweise aus Kunststoff, insbesondere aus einem Gummi, besteht. Die Beschichtung 36 liegt also an der Seite des Abstützelements 9 vor, die dem Gegenlager 10 zugewandt ist, also eine Stützfläche 37 bildet. Vorzugsweise ist die Beschichtung 36 auf der gesamten Stützfläche 37 vorgesehen, die dem Gegenlager 10 zugewandt ist. Bevorzugt weist auch das Abstützelement 7 beziehungsweise die Abstützplatte 6 eine derartige Beschichtung 36 an ihrer Stützfläche 38 auf, wobei die Stützfläche 38 außen, also an der dem Gut 3 zugewandten Seite des Abstützelements 7 liegt. Die Beschichtung 36 kann sowohl eine auf die Stützflächen 37 und 38 der Abstützelemente 7 und 9 aufgespritzte Kunststoff- beziehungsweise Gummimasse sein als auch als Belag beziehungsweise Platte ausgebildet sein, der/die an die Stützflächen 37 und 38 geklebt oder anderweitig an den Stützflächen 37 und 38 befestigt ist.

In Figur 2 ist der dem Abstützelement 9 naheliegende Kugelkopf 30 der Gelenkverbindung 18 mit der Stützstrebe 11 verbunden, insbesondere durch eine Schweißnaht 39 an der Stützstrebe 11 befestigt. Mithin liegt die Kugelpfanne 31 am Abstützelement 9 vor. Somit weist das Abstützelement 8 den Fortsatz 32 auf, der die Pfanne 31 aufweist. Der Fortsatz 32 kann einstückig mit dem Abstützelement 9 ausgeführt sein oder wie in Figur 2 dargestellt, fest mit dem Abstützelement 8 verbunden sein. Hierzu kann beispielsweise zumindest eine Schweißnaht 39 vorgesehen sein.

Das Längenverstellelement 22 wird im Ausführungsbeispiel gemäß Figur 2 durch einen Kolben 26 gebildet, der in einem Zylinder 25 geführt ist, wobei insbesondere vorgesehen ist, daß der Zylinder 25 von der als Rohr ausgebildeten Stützstrebe 12 gebildet wird. Somit ist der Kolben 26 innerhalb der Stützstrebe 25 in Pfeilrichtung 27 und entgegen Pfeilrichtung 27 verschiebbar geführt. Zum Aus- und Einfahren des Kolbens 26 ist eine Handkurbel 40 vorgesehen, die je nach Drehrichtung den Kolben 26 ein- beziehungsweise ausfährt. In bevorzugter Ausführungsform weist der Kolben 26 eine Verzahnung auf, die sich zumindest bereichsweise über dessen Länge erstreckt. Mithin kann die Handkurbel 40 auf ein Zahnrad wirken beziehungsweise dieses antreiben, wobei das Zahnrad mit der Verzahnung des Kolbens 26 kämmt. Durch Drehung der Handkurbel 40 wird das Zahnrad mitgedreht, so daß der Kolben 26 ein-oder ausgefahren wird, da das Zahnrad auf die Verzahnung des Kolbens 26 wirkt. Anstelle der Handkurbel 40 kann auch eine Motorbetätigung vorgesehen sein. Es kann also ein manuell oder maschinell angetriebenes Betätigungselement 41 vorgesehen sein, das im vorliegenden Ausführungbeispiel als Handkurbel 40 realisiert ist. Der der Gelenkverbindung 28 zugeordnete Kugelkopf 30 ist bevorzugt mit einer Schweißnaht 39 am Ende 29 des Kolbens 26 befestigt.

## Patentansprüche

1. Strebenartige Transportsicherungsvorrichtung für ein insbesondere auf einer Ladefläche (1) aufliegendes Gut (3), wobei die Transportsicherungsvorrichtung (5) zwischen dem Gut (3) und einem Gegenlager (10) anordenbar ist, mit mindestens zwei zur Abstützung am Gut (3) beziehungsweise am Gegenlager (10) dienenden Abstützelementen (7,9) und mit einer zwischen den Abstützelementen (7,9) angeordneten Längenverstellvorrichtung (33), die zur Grobeinstellung zwei teleskopartig ineinander geführte und in vorgegebener Längenposition miteinander fixierbare Stützstreben (11,12) sowie zur Spannung des Guts (3) ein kontinuierlich arbeitendes Längenverstellelement (22) aufweist.

2. Transportsicherungsvorrichtung nach Anspruch 1, **dadurch gekennzeichnet,** daß zur Grobeinstellung die Stützstreben (11,12) miteinander in Fluchtungsposition bringbare Durchbrüche (13) aufweisen, in die -zur Fixierung der Längenposition- ein Bolzen (16) steckbar ist.

3. Transportsicherungsvorrichtung nach Anspruch 1, **dadurch gekennzeichnet,** daß das gutseitige Abstützelement (7) als Abstützplatte (6) ausgebildet ist.

4. Transportsicherungsvorrichtung nach einem der vorhergehenden Ansprüche, **dadurch gekennzeichnet,** daß das gutseitige Abstützelement (7) gelenkig mit der Längenverstellvorrichtung (33) verbunden ist.

5. Transportsicherungsvorrichtung nach Anspruch 1, **dadurch gekennzeichnet,** daß das gegenlagerseitige Abstützelement (9) gelenkig mit der Längenverstellvorrichtung (33) verbunden ist.

6. Transportsicherungsvorrichtung nach einem der vorhergehenden Ansprüche, **dadurch gekennzeichnet,** daß das gegenlagerseitige Abstützelement (9) als Abstützplatte (8) ausgebildet ist.

7. Transportsicherungsvorrichtung nach Anspruch 1, **dadurch gekennzeichnet,** daß das Längenverstellelement (33) eine hydraulische oder pneumatische Kolben-Zylindereinheit (24) aufweist.

8. Transportsicherungsvorrichtung nach Anspruch 1, **dadurch gekennzeichnet,** daß zumindest eine Stützstrebe (11,12) als Rohr ausgebildet ist, daß das Längenverstellelement (33) einen Kolben (26) aufweist, der in der Stützstrebe (11,12) geführt ist, und daß ein Betätigungselement (41) auf den Kolben (26) wirkt, um diesen ein- und auszufahren.

9. Transportsicherungsvorrichtung nach einem der vorhergehenden Ansprüche, **dadurch gekennzeichnet,** daß die Stützstreben (11,12) und das Längenverstellelement (22) in Reihe zueinander angeordnet sind.

10. Transportsicherungsvorrichtung nach einem der vorhergehenden Ansprüche, **dadurch gekennzeichnet,** daß die Kolben-Zylindereinheit (24) eine Schnellverschluß-Kupplung (34) zum Anschließen an eine Versorgungseinrichtung aufweist.

11. Transportsicherungsvorrichtung nach einem der vorhergehenden Ansprüche, **dadurch gekennzeichnet,** daß die Versorgungseinrichtung und die Kolben-Zylindereinheit (24) eine Baueinheit bilden.

12. Transportsicherungsvorrichtung nach einem der vorhergehenden Ansprüche, **dadurch gekennzeichnet,** daß die gelenkigen Verbindungen (18,28) zwischen gutseitigem Abstützelement (7) und Längenverstellvorrichtung (33) beziehungsweise zwischen gegenlagerseitigem Abstützelement (9) und Längenverstellvorrichtung (33) jeweils einen Kugelkopf (30) und eine den Kugelkopf (30) aufnehmende Pfanne (31) aufweisen.
